# EUROPEAN PATENT APPLICATION

(11) **EP 2 258 900 A2**
(43) Date of publication of application: **08.12.2010**
(21) Application number: 10251006.2
(22) Date of filing: 28.05.2010
(51) Int. Cl.: D21B 1/32, D21F 9/00, D21F 1/36, D21F 7/00

(54) **Belt meandering preventive device of used paper recycling apparatus, paper making device and used paper recycling apparatus**

(30) Priority: 01.06.2009 JP 2009131938
(71) Applicant: Seed Co., Ltd., Osaka-shi Osaka (JP)
(72) Inventor: Tamai, Shigeru, Osaka-shi Osaka (JP); Koyama, Yuji, Osaka-shi Osaka (JP)
(74) Representative: Mounteney, Simon James

(57) **Abstract**

In a used paper recycling apparatus of furniture size that can be installed in a small shop or room, this is a belt meandering preventive device of a simple structure for executing the paper making process for manufacturing used paper pulp at low trouble rate and high reliability. A rolling roller (140) rolls on a mesh belt (105) of a paper making net conveyor unit (95) for processing and conveying used paper pulp (UPP) while applying a tension a, roller oscillating unit (141) oscillates this rolling roller (140) in a direction intersecting with the running direction of the mesh belt (105), and the rolling rollers (140) is maintained at the neutral position so as to be perpendicular to the running direction of the mesh belt (105) when the running position of the mesh belt (105) is in an appropriate running range, and the rolling roller (140) is directed to a meandering correcting direction for moving the running position of the mesh belt (105) into the appropriate running range when the running position of the mesh belt (105) is out of the appropriate running range.

## Description

### BACKGROUND OF THE INVENTION

### Field of the Invention

The present invention relates to a belt meandering preventive device of used paper recycling apparatus, a paper making device, and a used paper recycling apparatus, and more particularly to a belt meandering preventive technology in a used paper recycling apparatus of furniture size, installed at the site of origin of used paper, for recycling and processing into reusable paper at the site without discarding the generated used paper.

### Description of the Related Art

Used paper of various types such as used and unnecessary documents occurs not only in government offices or private companies, but also in daily life or general household. Used paper is usually discarded, incinerated, or disposed as refuse.

On the other hand, in the global concern about effective use of limited resources on earth, various technologies have been developed to recycle and use the used paper being disposed and discarded so far.

Such used paper recycling technologies are mostly installed and executed in the paper making industry, and the used paper recycling plant requires, like the ordinary paper making plant, a vast land, an immense investment, and a huge quantity of water and chemicals for the purpose of high speed and mass production and high quality of recycled paper.

For recycling of used paper, a tremendous manual labor is needed for collecting used paper, and used paper collection involves various problems, such as mixing of foreign matter by multiple garbage collectors, defective classification due to lack of knowledge about used paper recycling, and entry of harmful objects, and if used paper is collected, in order to recycle by 100 percent as recycled paper, final checking by specialists and cleaning works are needed. On the other hand, confidential documents are not easily recycled and are mostly incinerated, and the recycling rate is low.

To solve these problems of used paper recycling, an effective method is the development of a technology capable of recycling at the site of origin of used paper, and from such point of view, a new system is developed and proposed by the present applicant, for example, in Japanese Patent Application Laid-Open No. 2008-174877 as a used paper recycling apparatus.

This used paper recycling apparatus is a realization of used paper recycling technology of large scale such as used paper recycling plant in a small size that can be installed in a small shop or a room in general household, and includes, in an apparatus case of furniture size, a pulp making unit for macerating and beating used paper to manufacture used paper pulp, a paper making unit for making recycled paper from the used paper pulp manufactured in this pulp making unit, and a control unit for driving and controlling the pulp making unit and the paper making unit in cooperation, in which the paper making unit includes a paper making process unit for manufacturing wet paper from the used paper sent from the pulp making unit, and a drying process unit for manufacturing recycled paper by drying the wet paper manufactured in this paper making process unit, and these two process units are composed in a form of belt conveyor having a running belt for processing and conveying the used paper pulp.

The used paper is macerated and beaten in the pulp making unit to become used paper pulp, and then this used paper pulp is conveyed on the running belt of the belt conveyor in the paper making unit, and is filtered and dewatered, squeeze and dewatered, and heated and dried, and is formed into recycled paper. In this case, in the stage of pulp, the used paper is decomposed to fiber level, and the printed characters and diagrams are completely decomposed and lost, and cannot be restored, so that leak or disclosure of confidential information or personal information composed in printed characters and diagrams can be securely prevented.

### BREIF SUMMARY OF THE INVENTION

It is a primary object of the present invention to present a novel belt meandering preventive device of a used paper recycling apparatus improved further from the paper making unit of the conventional used paper recycling apparatus.

It is other object of the present invention to present a belt meandering preventive device in a simple structure capable of executing a paper making process of manufacturing used paper pulp at high reliability, at low trouble rate, smoothly and efficiently, in a used paper recycling apparatus of furniture size to be installed not only in a large office, but also in a small shop or a room in general household, by further improving the belt conveyor structure of the paper making unit in the used paper recycling apparatus.

To achieve these objects, the belt meandering preventive device of the used paper recycling apparatus of the present invention is a device for preventing meandering of the running belt of the paper making unit for manufacturing recycled paper from the used paper pulp manufactured in the pulp making unit of a preceding process, in the used paper recycling apparatus of furniture size to be installed at the site of origin of the used paper, including a rolling roller rolling on the running belt of the belt conveyor unit for processing and conveying the used paper pulp sent from the pulp making unit, while applying a tension, roller oscillating means for oscillating this rolling roller in a direction intersecting with the running direction of the running belt, and control means for controlling this roller oscillating means according to the running state of the running belt, in which this control means controls the roller oscillating means so that the rolling roller may maintain the neutral position so as to be perpendicular to the running direction of the running belt when the running position of the running belt is in an appropriate running range, and so that the rolling roller may be directed to a meandering correcting direction for moving the running position of the running belt into the appropriate running range when the running position of the running belt is out of the appropriate running range.

Preferred embodiments include the following.
(1) The rolling position of the rolling roller on the running belt is set at a location not interfering with the processing function of the processing and conveying location of the running belt.
(2) The rolling roller has its both ends of the rotation support shaft supported on a support bracket, and the support bracket is oscillatably pivoted on the fixed side support part by way of a support shaft provided at the central position in the longitudinal direction.
(3) The support bracket is pivoted on the fixed side support part so as to support the rolling roller in a horizontal state and to oscillate in a horizontal direction.
(4) The roller oscillating means includes cam means provided at one end of the support bracket for supporting the rolling roller rotatably, and a drive source for driving this cam means by cam action, and by the cam action of the cam means by the drive source, the support bracket is oscillated.
(5) The cam means includes a drive cam formed as a disk-like eccentric cam rotated and operated by the drive source, and a driven cam formed at one end of the support bracket and made in a form of engaging groove to slidably contact and engage with the drive cam, and by the rotating motion of the drive cam, the support bracket oscillates by way of the driven cam to slidably contact and engage with the drive cam.
(6) The roller oscillating means is formed as an oscillating cylinder having a piston rod pivoted and coupled to one end of the support bracket for rotatably supporting the rolling roller, and by the protruding and retreating motion of the piston rod of the oscillating cylinder, the support bracket is designed to oscillate.
(7) Further including belt detecting means for detecting whether or not the running belt is running in an appropriate running range, the control means is designed to control according to the detection result of the belt detecting means so as to hold the rolling roller at a neutral position perpendicular to the running direction of the running belt in the case the running position of the running belt staying within an appropriate running range, to control the roller oscillating means so that the rolling roller may be at a meandering correcting position for moving the running belt into the appropriate running range in the case the running position of the running belt staying out of the appropriate running range.
(8) The meandering correcting action of the roller oscillating means by the roller oscillating means is configured to move the rolling roller to move gradually from the neutral position to the maximum meandering correcting direction position when the running position of the running belt is out of the appropriate running range, and to move the rolling roller to the neutral position to stop when the running position of the running belt is corrected of meandering to return to the appropriate running range.
(9) The meandering correcting action of the roller oscillating means by the roller oscillating means is configured to move the rolling roller to move instantly from the neutral position to the maximum meandering correcting direction position and stop when the running position of the running belt is out of the appropriate running range, and to move the rolling roller to the neutral position to stop when the running position of the running belt is corrected of meandering to return to the appropriate running range.
(10) The running belt of the belt conveyor unit is a mesh belt of a paper making net conveyor unit for manufacturing wet paper from the slurry-like pulp suspension mixed of water and used paper pulp.
(11) The running belt of the belt conveyor unit is a smooth surface belt of a drying belt conveyor unit for manufacturing recycled paper by drying the wet paper manufactured in the paper making net conveyor unit in a preceding process.

The paper making device of the present invention is applied in a used paper recycling apparatus of furniture size to be installed at the site of origin of used paper, comprising a paper making unit for manufacturing recycled paper from the used paper pulp manufactured in a pulp making unit of a preceding process, and includes a paper making net conveyor unit for manufacturing wet paper from a slurry-like pulp suspension mixed of water and used paper pulp sent from the pulp making unit, a drying belt conveyor unit for manufacturing recycled paper by drying the wet paper manufactured in this paper making net conveyor unit, and a dewatering roll unit for squeezing and dewatering the wet paper at a linkage part of the paper making net conveyor unit and the drying belt conveyor unit, in which the paper making net conveyor unit and the drying belt conveyor unit individually have running belts for processing and conveying the used paper pulp manufactured in the pulp making unit, and belt meandering preventive means for preventing meandering of these running belts is provided, and this belt meandering preventive means is composed of the belt meandering preventive device described above.

The used paper recycling apparatus of the present invention includes, in an apparatus case of furniture size, a pulp making unit for manufacturing used paper pulp by macerating and beating used paper, a paper making unit for manufacturing recycled paper by making from the used paper pulp manufactured in this pulp making unit, and a control unit for driving and controlling the pulp making unit and the paper making unit in cooperation, in which the paper making unit is composed of the paper making device described above.

According to the belt meandering preventive device of the used paper recycling apparatus of the present invention, the rolling roller rolls on the running belt of the belt conveyor unit for processing and conveying the used paper pulp while applying a tension, the roller oscillating means oscillates the rolling roller in a direction to intersect with the running direction of the running belt, and is configured to maintain the rolling roller at the neutral position perpendicular to the running direction of the running belt when the running position of the running belt is within the appropriate running range, and to move the rolling roller in a meandering correcting direction position by moving the running position of the running belt into the appropriate running range when the running position of the running belt is out of the appropriate running range, and therefore the belt meandering preventive device is realized in a small and simple structure suited to a very compact apparatus configuration of a used paper recycling apparatus of compact size that can be installed in a small shop or a general household room, so that the running belt of the belt conveyor unit of the paper making unit may always run stably in the appropriate running range, and thereby the paper making process is a very narrow processing space can be executed at high reliability, smoothly, at high efficiency, and at a low trouble rate.

Accordingly, the present invention realizes and presents a used paper recycling apparatus of furniture size that can be installed not only in a large office, but also in a small shop or a general household, being friendly to the environment, low in running cost, capable of preventing leak or disclosure of confidential information, personal information, and various types of information, and capable of maintaining a high confidentiality.

These and other objects and features of the present invention will be appreciated by reading the detailed description made in conj unction with the accompanying drawings, and novel facts pointed out in the claims thereof.

### BRIEF DESCRIPTION OF THE DRAWINGS

Fig. 1 is a front sectional view of an overall outline configuration of a used paper recycling apparatus in preferred embodiment 1 of the present invention.
Fig. 2 is a side sectional view of an overall outline configuration of the same used paper recycling apparatus.
Fig. 3 is a circuit diagram of configuration of a used paper circulation route of a beating unit of the used paper recycling apparatus.
Fig. 4 is a block diagram of configuration of a pulp concentration adjustment unit of the used paper recycling apparatus.
Fig. 5 is a front view of outline configuration of a paper making unit of the used paper recycling apparatus.
Fig. 6 shows a configuration of a belt meandering preventive device of a paper making net conveyor unit in the paper making unit, in which Fig. 6 (a) is a partially cut-away plan view, and Fig. 6 (b) is a partially cut-away front view of the same.
Fig. 7 shows a configuration of a belt meandering preventive device of a drying belt conveyor unit in the paper making unit, in which Fig. 7 (a) is a partially cut-away plan view, and Fig. 7 (b) is a partially cut-away front view of the same.
Fig. 8 is a block diagram of control configuration of the belt meandering preventive device.
Fig. 9 is a schematic diagram for explaining the meandering correcting action of the belt meandering preventive device.
Fig. 10 shows a configuration of a roller oscillating unit and a sensor unit in meandering correcting action of the belt meandering preventive device, in which Fig. 10 (a) is a partial sectional plan view showing the mutual positional relation of the roller oscillating unit and the sensor unit, and Fig. 10(b) is a partial sectional plan view sowing the detecting operation of the sensor unit.
Fig. 11 is a perspective view of outline configuration of the used paper recycling apparatus.
Fig. 12 is a partially cut-away plan view of configuration of a belt meandering preventive device in a paper making unit of a used paper recycling apparatus in preferred embodiment 2 of the present invention.

### DETAILED DESCRIPTION OF THE PREFERRED EMBODIMENTS

A preferred embodiment of the present invention is specifically described below while referring to the accompanying drawings. Throughout the drawings, same reference numerals refer to same components or elements.

### Preferred Embodiment 1

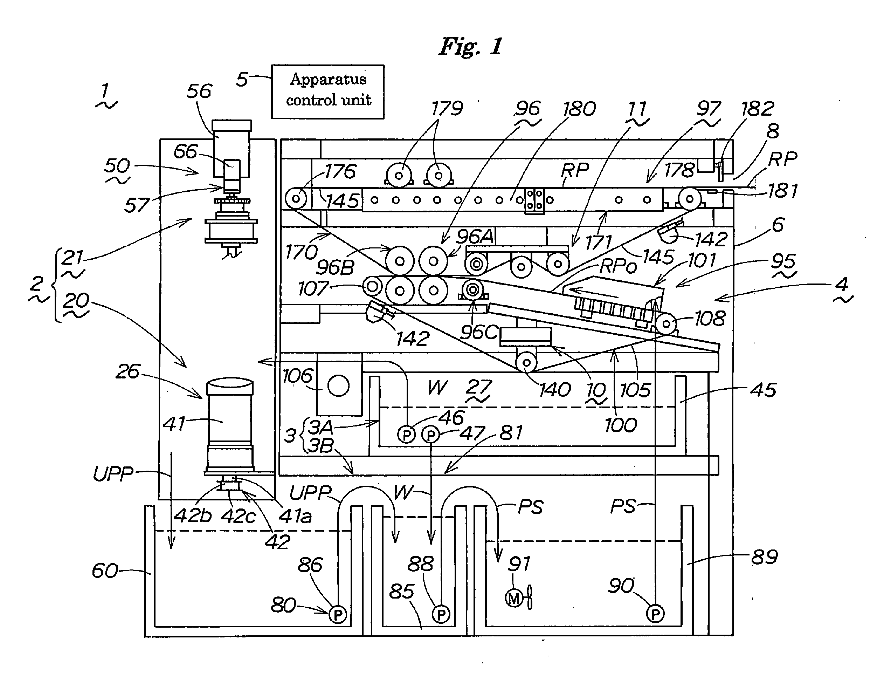

The used paper recycling apparatus of the present invention is shown in Fig. 1 to Fig. 11, and this used paper recycling apparatus 1 is specifically installed at the site of origin of used paper, and it is an apparatus for recycling into a re-usable paper at the site without discarding the generated used paper UP, and the used paper UP includes confidential documents of government offices or private companies, personal letters and others in the general household, and other used and unnecessary documents.

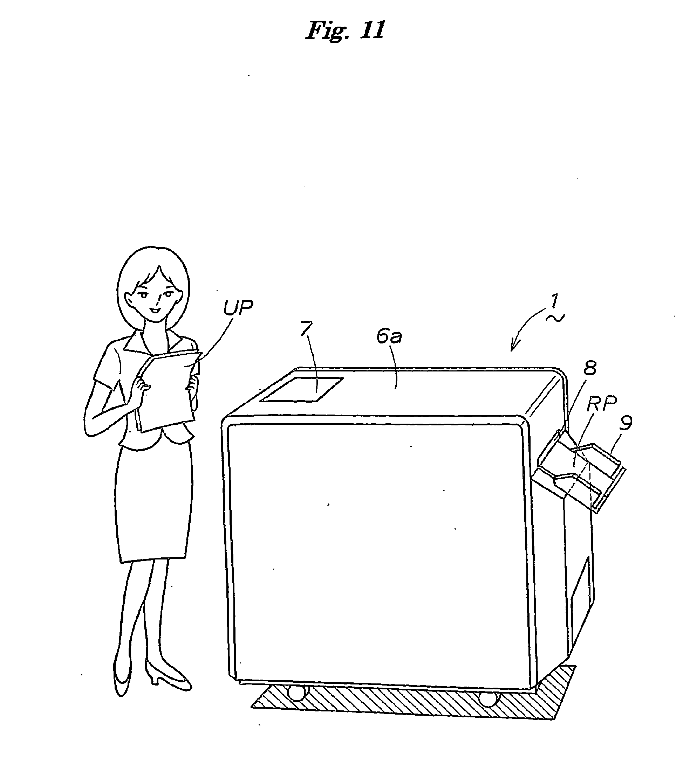

The used paper recycling apparatus 1 is a furniture size as shown in Fig. 11, that is, small in size and shape similar to furniture, such as document rack, locker, office desk, copier or personal computer used in an office, and mainly includes, as shown in Fig. 1, a pulp making unit 2, a pulp concentration adjustment unit 3, a paper making unit (paper making device) 4, and an apparatus control unit (control unit) 5, and the paper making unit 4 includes belt meandering preventive units (belt meandering preventive means) 10, 11 which are characteristic components of the present invention.

These apparatus units 2 to 5 are built in a compact design to be installed in an apparatus case 6. The apparatus case 6 is a furniture size as mentioned above, and may be designed in specific dimensions and shapes appropriately according to the purpose or application. The apparatus case 6 in the illustrated preferred embodiment is a rectangular box having dimensions and shapes similar to a copier installed and used in a general office, and the top plate of the apparatus case 6 has an inlet 7 which is opened and closed for supplying used paper UP, and an discharge port 8 is provided at the side for discharging recycled paper RP, RP, .... At the lower edge portion of this outlet 8, a recycled paper receiving tray 9 is detachably provided for receiving recycled paper RP, RP, ... discharged from the discharge port 8.

The pulp making unit 2 is a process location for manufacturing used paper pulp by macerating and beating the used paper UP, and is composed of a macerating unit 20 for agitating, crushing and macerating the used paper UP, and a beating unit 21 for beating the used paper UP macerated in the macerating unit 20.

The macerating unit 20 is a process location for agitating, crushing and macerating the used paper UP, and is mainly composed of a macerating tank 25, an agitating device 26, and a water feed device 27.

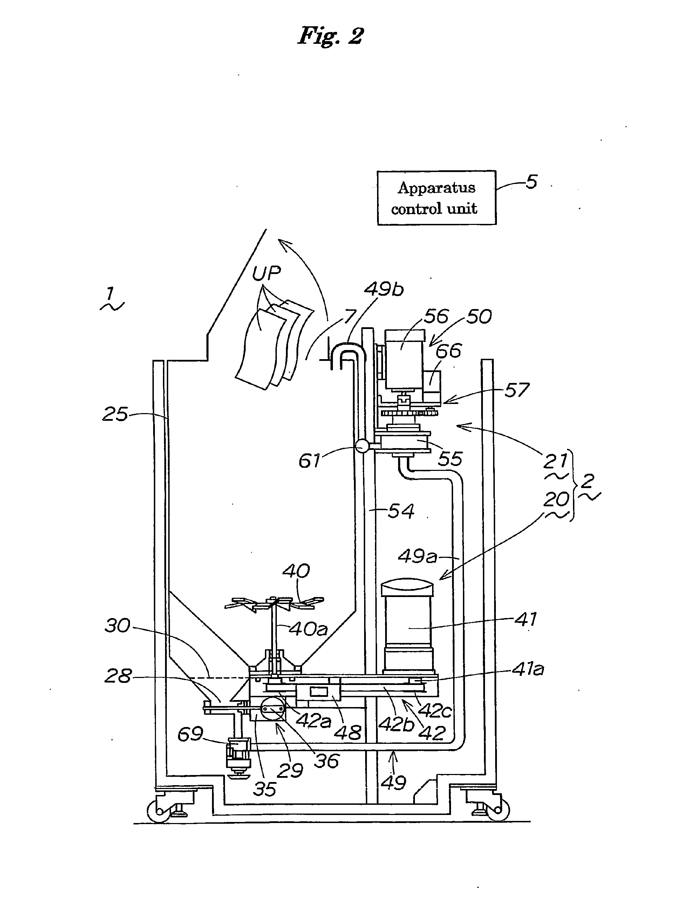

The macerating tank 25 has the inlet 7 formed in its ceiling wall as shown in Fig. 2 for charging and supplying the used paper UP, and a discharge port 28 is provided in its bottom wall for discharging the macerated used paper pulp UPP to the downstream side. The inner volume of the macerating tank 25 is determined according to the number of sheets of used paper UP to be processed in batch. In the illustrated preferred embodiment, the macerating tank 25 has a capacity of agitating and treating (in batch) a total of about 500 sheets (about 2000 g) of used paper UP of A4 format PPC (plain paper copier) by adding about 98 liters of water. In this case, the concentration of the used paper pulp UPP to be macerated is about 2%. The concentration is adjusted by supplying water from the water feed device 27, and this water feed device 27 is a part of the pulp concentration adjustment unit 3 described below.

The inlet 7 has a structure to be opened and closed to the outside of a case cover 6a of the apparatus case 6. The discharge port 28 is opened and closed by an opening and closing valve 29, and communicates with a used paper pulp circulation route 49 described below. At the location of the discharge port 28, a debris filter 30 is provided for removing obstacles for the next beating process, such as clips, staples, pins and others used for binding the used paper UP, UP, ....

The opening and closing valve 29 opens and closes specifically by the crank motion of a crank mechanism 36 driven by a drive motor 35. The drive motor 35 is specifically an electric motor, and this drive motor 35 is electrically connected to the apparatus control unit 5.

The agitating device 26 is provided inside of the macerating tank 25, and includes an agitation impeller 40 and a drive motor 41.

The agitation impeller 40 has its rotation shaft 40a supported rotatably in an upright position in the central position of the bottom of the maceration tank 25, and is rotatable in the horizontal direction, and the lower end of the rotation shaft 40a is driven and coupled to a rotation shaft 41a of the drive motor 41 by way of transmission means 42 composed of a transmission pulley 42a, a transmission belt 42b, and a transmission pulley 42c.

The water feed device 27 is to supply water into the macerating tank 25, and forms a beating concentration adjustment unit 3A of the pulp concentration adjustment unit 3 as described below.

The water feed device 27 in the illustrated preferred embodiment includes, as shown in Fig. 1, a white water collection tank 45, a water feed pump 46 for beating concentration adjustment, and a water feed tank 47 for paper making concentration adjustment. The white water collection tank 45 is, as described below, designed to collect white water W (pulp water of very low concentration filtered through a paper making mesh in the paper making process) filtered and dewatered in the paper making unit 4, and the white water W collected in the white water collection tank 45 is first supplied into the macerating tank 25 from the water feed pump 46, and then into a concentration adjustment tank 85 described below from the water feed pump 47.

In this relation, in the bottom of the macerating tank 25, a weight sensor 48 is provided, and the used paper UP, UP, ... and the water to be processed in batch in the macerating tank 25 are weighed and controlled, and the weight sensor 48 is electrically connected to the apparatus control unit 5.

The weight sensor 48 of the illustrated preferred embodiment is a load cell, and is designed to sense and measure the total weight of weight of the macerating tank 25, and weight of used paper UP, UP, ... and water charged and supplied in the macerating tank 25.

In a specific control constitution of the macerating unit 20, in the first place, when the inlet 7 is opened by the operator, and the used paper UP, UP, ... are charged into the macerating tank 25, the weight is sensed and measured by the weight sensor 48, and when reaching a specified weight (number of sheets), the operator is informed of it by sound and/or display. According to the display, when the operator closes the inlet 7, the water feed device 27 is driven, and the water W in the white water collection tank 45 is supplied by the water feed pump 46 into the macerating tank 25 by the portion corresponding to the charged weight of used paper UP, UP, ... (the number of sheets).

When the operator closes the outlet 7 after charging an arbitrary amount of used paper UP, UP, ... into the macerating tank 25 from the inlet 7 (an amount smaller than the specified weight (number of sheets)), the weight is sensed and measured by the weight sensor 48, and the water feed device 27 is driven, and the water W corresponding to the measured weight is supplied by the water feed pump 46 into the macerating tank 25 from the white water collection tank 45.

In the illustrated preferred embodiment, as mentioned above, when PPC used paper UP of A4 format is supplied into the macerating tank 25 by about a maximum capacity, about 500 sheets (about 2000 g), at this moment, it is noticed to the operator by sound and/or display, and by the closing operation of the inlet 7, about 98 liters of water is supplied from the water feed device 27, or when an arbitrary amount of used paper UP, UP, ... is supplied (an amount smaller than the specified weight (number of sheets)), the water corresponding to the supplied amount of used paper is added to the water feed device 27, and the concentration of the used paper pulp UPP to be macerated is controlled and adjusted to about 2%.

Thus, in the agitating device 26, the used paper UP, UP, ... charged into the macerating tank 25 from the charging opening of the apparatus case 6, that is, the inlet 7 are agitated and mixed for a specified time (10 to 20 minutes in the illustrated preferred embodiment) in the water supplied from the water feed device 27 by normal and reverse rotation of the agitation impeller 40 by the drive motor 41, and thereby the used paper UP, UP, ... are macerated and beaten into used paper pulp UPP.

The discharge port 28 of the macerating tank 25 is closed by the opening and closing valve 29 during operation of the macerating unit 20, and flow of used paper UP or used paper pulp UPP from the macerating tank 25 into the used paper pulp circulation route 49 is blocked, while the inlet 7 is opened by the opening and closing valve 29 during operation of the beating unit 21 described later, and the flowing and circulating loop of the used paper pulp UPP from the macerating tank 25 into the used paper pulp circulation route 49 is allowed.

The beating unit 21 is a process unit for beating the used paper UP macerated in the macerating unit 20, and is specifically designed to pressurize and beat the used paper UP macerated in the macerating unit 20, and to grind and pulverize (into micro-fibers) the inks forming characters and patterns on the used paper UP (printing inks forming characters and patterns on the used paper UP by various printing technologies, or inks forming characters and patterns on the used paper UP by pencil, ball-point pen, fountain pen, and other writing tools).

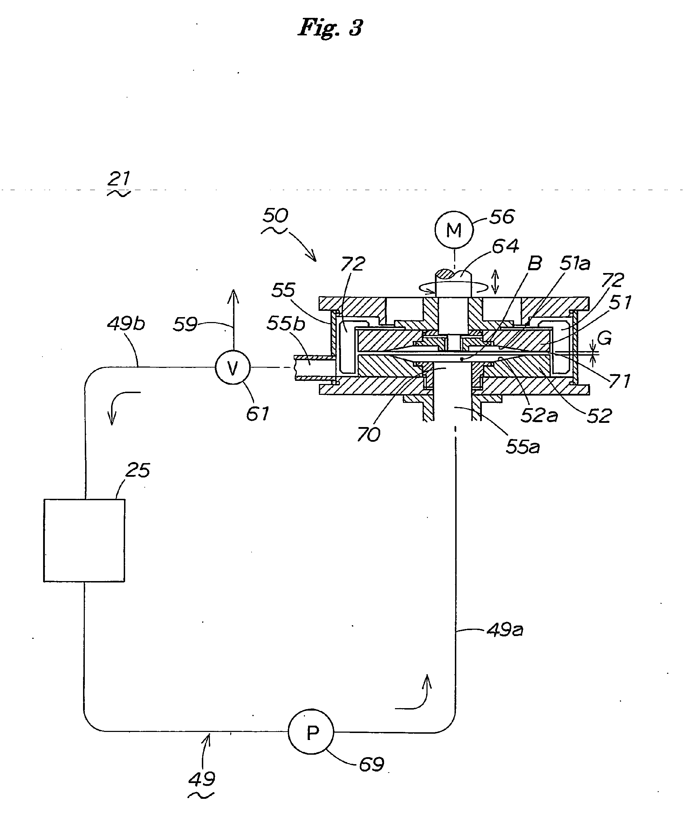

This beating unit 21 mainly includes a grinder 50. This grinder 50 includes, as shown in Fig. 3, a pair of beating disks 51, 52 rotated and driven relatively, and the pair of beating disks 51, 52 have beating action surfaces 51a, 52a disposed oppositely and concentrically across a tiny beating gap G.

The beating gap G of the beating action surfaces 51a, 52a of the grinder 50 is determined so as to be narrowed gradually, as described below, from the grinder 50 in an initial period of beating process to the grinder 50 in a later period.

In the beating unit 21 of the present preferred embodiment, as shown in Fig. 3, the used paper pulp circulation route 49 having the grinder 50 is formed, and the used paper pulp UP is circulated and beaten for a specified time by way of the grinder 50 in a circulation system.

By execution of the beating process in the used paper pulp circulation route 49, in spite of the small and narrow process space in the apparatus case 6 of furniture size, a used paper pulp beating process route of basically infinite length not limited in length is formed, and the beating process space equally compared with the beating process of a large-scale apparatus is realized, and an optimum beating effect is obtained according to the purpose.

Moreover, one grinder 50 carries out the whole beating process throughout the entire process of the beating process, and this one grinder 50 has the functions of a plurality of grinders from the grinder in an initial period of beating process to the grinder in a later period. More specifically, the beating gap G of the beating action surfaces 51a, 52a of the grinder 50 is controlled and adjusted so as to be narrower gradually from the initial period to the final period of the beating process.

The grinder 50 of the illustrated preferred embodiment is disposed, as shown in Fig. 2, adjacently to the macerating tank 25 of the macerating unit 20, on an apparatus machine body 54 composing the apparatus case 6, and as shown in Fig. 3, it further includes a beating tank 55 communicating with the macerating tank 25 of the macerating unit 20, the pair of beating disks 51, 52 provided relatively and rotatably in this beating tank 55, a rotation drive source 56 for relatively rotating the pair of beating disks 51, 52, and gap adjusting means 57 for adjusting the beating gap G of the pair of beating disks 51, 52.

The beating tank 55 is formed in a closed cylindrical shape for accommodating the pair of beating disks 51, 52, and has a supply port 55a for supplying the used paper pulp UPP from the upstream side, and a discharge port 55b for discharging the beaten used paper pulp UPP to the downstream side.

More specifically, the supply port 55a is opened in the center of the bottom of the beating tank 55 toward the vertical direction, and the discharge port 55b is opened at the cylindrical side of the beating tank 55 toward the horizontal direction. The supply port 55a and the discharge port 55b are connected to communicate with the macerating tank 25 of the macerating unit 20, respectively by way of circulation pipings 49a, 49b as shown in Fig. 3, and the discharge port 55b is further connected to communicate with a used paper pulp collection tank 60 by way of a discharge piping 59.

Reference numeral 61 shows a direction changeover valve, by the changeover operation of this direction changeover valve 61, the used paper pulp UPP discharged from the discharge port 55b is selectively returned to the macerating tank 25, or collected in the used paper pulp collection tank 60. The direction changeover valve 61 is specifically an electromagnetic valve, and is electrically connected to the apparatus control unit 5.

Of the pair of beating disks 51, 52, one is a fixed side beating disk fixed in the rotating direction, and other is a rotating side beating disk which is rotatable. In the illustrated preferred embodiment, the upper side beating disk 51 is the rotating side, and the lower side beating disk 52 is the fixed side, and the rotating side beating disk 51 of the upper side is disposed oppositely to the fixed side beating disk 52 of the lower side, concentrically and rotatably across a tiny beating gap G. The rotating side beating disk 51 is driven and coupled to a drive motor 56 by way of a rotation main shaft 64 pivoted rotatably to the fixed side of the apparatus machine body 54 and movably in the axial direction.

Although not shown specifically, the rotation main shaft 64 is rotatably pivoted on an elevating member of the gap adjusting means 57, and the rotating side beating disk 51 is concentrically and integrally attached at its leading end, and its base end part is driven and coupled integrally in the rotating direction and relatively movably in the axial direction on the rotation shaft of the drive motor 56.

The drive motor 56 is a rotation drive source, and relatively rotates the pair of beating disks 51, 52, and specifically an electric motor is used, and the drive motor 56 as its drive source is electrically connected to the apparatus control unit 5.

The opposite surfaces 51a, 52a of the both beating disks 51, 52 forming the tiny beating gap G mutually collaborate to form beating action surfaces. These opposite beating action surfaces 51a, 52a are formed as wheel surfaces having a multiplicity of abrasive grains bonded by a bonding agent. The both beating action surfaces 51a, 52a are, as shown in Fig. 3, formed in a taper shape continuously increased in the diameter size in the mutually opposite directions, and are formed as annular flat surfaces parallel to each other at the outermost peripheral edges, and these annular flat surfaces form the beating gap G.

In other words, in the pair of beating disks 51, 52, in the central position of the beating action surface 52a of the fixed side beating disk 52, an inlet 70 is formed to communicate coaxially with the supply port 55a of the beating tank, and the two annular flat surfaces formed on the outer peripheral edges of the beating action surfaces 51a, 52a of the pair of beating disks 51, 52 form an outlet 71 communicating with the discharge port 55b of the beating tank 55 and having the beating gap G.

On the outer circumference of the rotating side beating disk 51, a plurality of blades 72, 72, ... are formed at specified intervals in the circumferential direction, and these blades 72, 72, ... push out the used paper pulp UPP discharged from the outlet 71 in pumping action toward the discharge port 55b of the beating tank 55 by centrifugal force by rotation of the rotating side beating disk 51.

By the drive motor 56 as the drive source, when the rotating side beating disk 51 is rotated and driven to the fixed side beating disk 52, the used paper pulp UPP supplied into a beating space B by way of the supply port 55a of the beating tank 55 and the inlet 70 from the macerating tank 25 of the macerating unit 20 flows into the beating space B from the inlet 70, and passes through this beating space B, and is pressurized and beaten by the relatively rotating beating action surfaces 51a, 52a, and the inks forming the characters and patterns on the used paper UP are ground and pulverized, and then it is discharged by way of the discharge port 55b of the beating tank 55 from the outlet 71.

At the time of discharge from this outlet 71, the used paper pulp UPP is further pressurized and beaten at the location of the outlet 71 having the beating gap G, and is pulverized to a specified micron size (to become micro-fiber) defined by this beating gap G.

In this regard, in the present preferred embodiment, as mentioned above, in the circulation system beating process disposing only one grinder 50 in the used paper pulp circulation route 49 (see Fig. 3), this one grinder 50 has the functions of a plurality of grinders from the grinder in an initial period of beating process to the grinder in a terminal period, and more specifically, the beating gap G of the grinder 50 is controlled and adjusted by the gap adjusting means 57 so as to be narrower gradually from the initial period to the final period of the beating process.

The gap adjusting means 57 is not particularly illustrated, but is designed to move the pair of beating disks 51, 52 relatively in the rotation axial direction, to control and adjust the beating gap G of these beating disks 51, 52, and is mainly composed of moving means (not shown) for moving the rotating side beating disk 51 in the rotation axial direction, that is, in the axial direction of a rotation main shaft 64, and a drive source 66 for driving this moving means. The drive source is specifically an electric motor, and this drive motor 66 is electrically connected to the apparatus control unit 5.

By the rotation of this electric motor 66, the rotating main shaft 64 is moved up and down by way of the moving means, and therefore the rotating side beating disk 51 formed integrally with the rotation main shaft 64 is moved in the vertical direction to the fixed side beating disk 52, that is, in the rotation axial direction, and the beating gap G between the two beating disks 51, 52 is controlled and adjusted.

For this purpose, a position detection sensor (not shown) is provided for detecting the ascending and descending position of the rotating side beating disk 51, and according to the result of detection by this position detection sensor, the drive motor 66 is driven and controlled. The position detection sensor is electrically connected to the apparatus control unit 5.

The beating gap G of the beating disks 51, 52 is controlled and adjusted by the gap adjusting means 57 in the circulation system beating process by the used paper pulp circulation route 49 shown in Fig. 3, in mutual interaction with a circulation pump 69 which is circulating means.

That is, in Fig. 3, the used paper pulp UPP macerated by the macerating unit 20 is circulated through the used paper pulp circulation route 49 by the circulation pump 69, and is beaten by the grinder 50, and at this time the beating gap G of the beating action surfaces 51a, 52a of the grinder 50 is controlled by the gap adjusting means 57 so as to be narrower gradually from the initial period to the terminal period of the beating process.

In the used paper pulp circulation route 49, the macerating tank 25 of the macerating unit 20 is included, and in this beating process, the agitating device 26 of the macerating unit 20 is driven and controlled, and the macerating unit 20 is driven simultaneously with the beating unit 21. That is, in the circulation system beating process, the used paper pulp UPP flows out into the used paper pulp circulation route 49 from the macerating tank 25, while the used paper pulp UPP beaten by the grinder 50 flows into the macerating tank 25, and therefore in the macerating tank 25, the used paper pulp UPP of different degrees of beating is mixed, and by the agitating action by the agitating device 26, the degree of beating of the used paper pulp UPP in the macerating tank 25 is made uniform, and the beating process is promoted.

The used paper pulp collection tank 60 is a location for collecting the used paper pulp UPP beaten and pulverized to a desired size by the beating unit 21, and the used paper pulp UPP collected herein is mixed and adjusted to a paper making concentration corresponding to the finished paper quality of the recycled paper RP to be recycled as a pulp suspension PS, and is sent to the paper making unit 4 in a next paper making process.

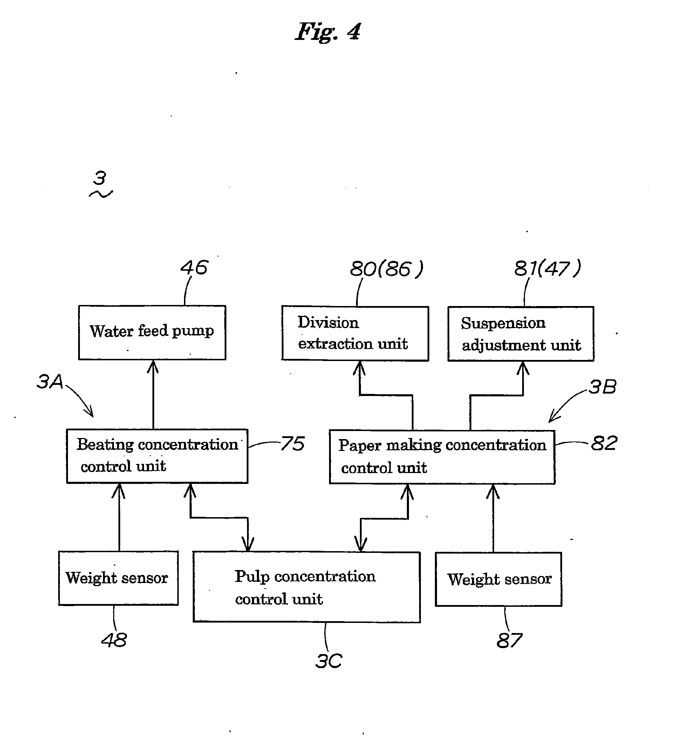

The pulp concentration adjusting unit 3 is a weight type device for adjusting the concentration of the used paper pulp UPP supplied in the paper making unit 4, by measuring the weight and adjusting the mixing rate of used paper UP and water W supplied into the apparatus, and more specifically as shown in Fig. 4, it includes a beating concentration adjusting unit 3A, a paper making concentration adjusting unit 3B, and a pulp concentration control unit 3C.

The beating concentration adjusting unit 3A is to adjust the beating concentration of the used paper pulp UPP in the pulp making unit 2, corresponding to the beating efficiency by the beating unit 21, and as mentioned above, it is mainly composed of the water feed pump 46 and the beating concentration control unit 75 for adjusting the beating concentration of the water feed device 27.

The supply amount of white water W by the water feed pump 46 of the beating concentration adjusting unit 3A is preferred to be set so that the beating concentration of the used paper pulp UPP macerated and beaten by the agitating device 26 may be, for example, the maximum concentration allowable for the beating capacity of the grinder 50 of the beating unit 21 for executing the next step of the beating process, and in the illustrated preferred embodiment, it is set to be a beating concentration of about 2% as mentioned above.

The beating concentration control unit 75 drives and controls the water feed pump 46 so as to supply a necessary amount of water W into the macerating tank 25, as mentioned above, according to the result of measurement from the weight sensor 48. This beating concentration control unit 75 composes a part of the apparatus control unit 5 as described below.

The paper making concentration adjusting unit 3B is to adjust the paper making concentration of the used paper pulp UPP in the paper making unit 4, to an appropriate concentration corresponding to the finished paper quality of the recycled paper RP to be recycled, and is more specifically designed to adjust the concentration of the used paper pulp UPP manufactured in the pulp making unit 2 by a division system, and it mainly includes a division extraction unit 80, a suspension preparing unit 81, and a paper making concentration control unit 82.

The division extraction unit 80 is to divide and extract by a specified small portion from the total volume of the used paper pulp UPP manufactured in the pulp making unit 2 in the preceding process, and includes a used paper pulp supply pump 86 for division and extraction for extracting the used paper pulp UPP of the used paper pulp collection tank 60 and sending to a concentration adjusting tank 85.

The suspension preparing unit 81 is to prepare a pulp suspension PS of a specified concentration by adding a prescribed amount of water W for concentration adjustment to the specified small portion of the used paper pulp UPP divided and extracted by the division extraction unit 80, and mainly includes a water feed pump 47 of the water feed device 27.

Although not shown specifically, in the bottom of the concentration adjusting tank 85, same as in the case of the macerating tank 25 mentioned above, a weight sensor 87 composed of a load cell is provided, and is designed to measure and control the amount of the used paper pulp UPP and water W for concentration adjustment supplied into the concentration adjusting tank 85, and the weight sensor 87 is electrically connected to the apparatus control unit 5.

The paper making concentration control unit 82 controls by interacting the division extraction unit 80 and the suspension preparing unit 81, and forms a part of the apparatus control unit 5, and controls the pumps 86, 47 of the division extraction unit 80 and the suspension preparing unit 81 by interaction so as to execute the following step of the paper making concentration adjusting process.

First of all, from the whole volume of the used paper pulp UPP collected into the used paper pulp collection tank 60 from the beating unit 21 (in the illustrated preferred embodiment, about 2000 g of used paper UP + 100 L of water W), the used paper pulp UPP of a specified portion (1 L in the illustrated preferred embodiment) is divided by the used paper pulp supply pump 86, and is transferred and contained in the concentration adjusting tank 85. As a result, its weight is sensed and measured by the weight sensor 87, and the result is sent to the apparatus control unit 5.

In succession, corresponding to the specified portion of the divided used paper pulp UPP, diluting water W is supplied by the water feed pump 47 into the concentration adjusting tank 85 from the white water collection tank 45 by a specified volume (9 L in the illustrated preferred embodiment, actually as weighed and measured by the weight sensor 87).

As a result, in the concentration adjusting tank 85, the used paper pulp UPP of beating concentration (2% in the illustrated preferred embodiment) and the water W are mixed and diluted, and a pulp suspension PS of a specified concentration (about 0.2% concentration or target concentration in the illustrated preferred embodiment) is mixed and prepared.

The target concentration of the pulp suspension PS to be prepared is determined in consideration of the paper making capacity in the paper making unit 4 described below on the basis of the results of the preliminary experiment, and it is set to about 0.2% in the illustrated preferred embodiment as mentioned above.

In this way, the pulp suspension PS prepared to the paper making concentration (0.2%) of the target concentration in the concentration adjusting tank 85 is transferred and supplied into a pulp supply tank 89 from the concentration adjusting tank 85 by a first suspension supply pump 88, and is stored in preparation for the next process of paper making unit 4. Thereafter, this paper making concentration adjustment process is repeated similarly for the entire volume of the used paper pulp UPP in the used paper pulp collection tank 60. The pulp supply tank 89 is provided with a second suspension supply pump 90 for sending the pulp suspension PS into a paper making net conveyor 95 of the paper making unit 4.

An agitating device 91 is provided in the pulp supply tank 89, and by the agitating action of this agitating device 91, the paper making concentration of the entire stored and held pulp suspension PS is uniformly kept at a specific value.

As described herein, the concentration adjustment by the paper making concentration adjusting unit 3 is not done in batch of whole volume, but is done in divided portions, that is, in small portions, and the water consumption is saved substantially, and the concentration adjusting tank 85 can be reduced in size and shape substantially, and hence the used paper recycling apparatus 1 is entirely built in a compact design.

The pulp concentration control unit 3C is to drive and control the beating concentration adjusting unit 3A and the paper making concentration adjusting unit 3B in interlock, and specifically by receiving the pulp concentration control information (the charging amount of the used paper UP, the water supply amount into the macerating tank 25, the beating concentration of the used paper pulp UPP, etc.) from the beating concentration control unit 75 of the beating concentration adjusting unit 3A, the paper making concentration control information (the target paper making concentration of the used paper pulp UPP, the division extraction amount of the used paper pulp UPP from the used paper pulp collection tank 60, the water supply amount into the concentration adjusting tank 85, etc.) for adjusting the concentration of the used paper pulp UPP manufactured in the pulp making unit 2 to the target concentration (the paper making concentration) according to this control information sent to the paper making concentration control unit 82 of the paper making concentration adjusting unit 3B, and thereby the paper making concentration adjusting process is executed.

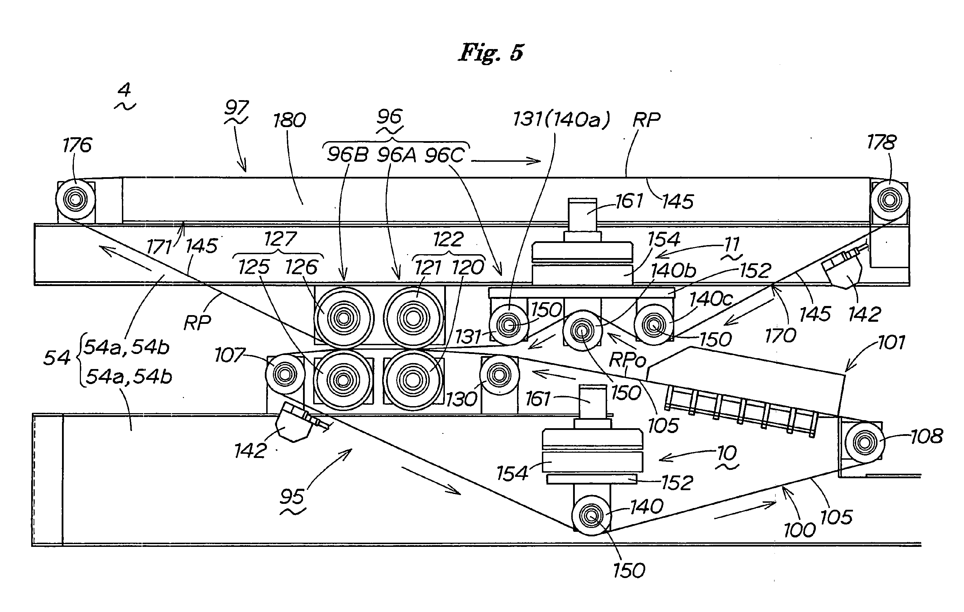

The paper making unit 4 is a process location for manufacturing recycled paper RP from the used paper pulp UPP manufactured in the pulp making unit 2, and is mainly composed of, as shown in Fig. 1 and Fig. 5, a paper making net conveyor unit 95, a dewatering roll unit 96, and a drying belt conveyor unit 97, and the paper making net conveyor unit 95 and the drying belt conveyor unit 97 are provided with the belt meandering preventive units (belt meandering preventive means) 10 and 11 as mentioned above.

That is, the paper making net conveyor unit 95 and the drying belt conveyor unit 97 are provided with, as described below, running belts for processing and conveying the used paper pulp UPP manufactured in the pulp making unit 2, that is, a mesh belt 105 and a smooth surface belt 145, and these running belts 105 and 145 are designed to prevent meandering by the belt meandering preventive units 10 and 11.

The paper making net conveyor unit 95 is a location for making wet paper by making from slurry-like pulp suspension PS composed of the water W and the used paper pulp UPP sent from the pulp supply tank 89 of the pulp making unit 2, and mainly includes a paper making conveyor 100 and a pulp supply unit 101.

The paper making conveyor 100 is for conveying the pulp suspension while making paper therefrom, and a mesh belt 105 of paper making mesh structure composed of numerous mesh cells is disposed for filtering and dewatering the pulp suspension PS while running straightly in its running direction.

Specifically, the paper making conveyor 100 includes the mesh belt 105 of an endless belt form for conveying the pulp suspension PS while making paper, and a drive motor 106 for driving and moving this mesh belt 105.

The plate member of the paper making mesh structure for composing the mesh belt 105 is a material capable of filtering and dewatering the pulp suspension PS appropriately by way of the numerous mesh cells of the paper making mesh structure, and preferred materials include polypropylene (PP), polyethylene terephthalate (PET), polyamide (PA) (generally known as Nylon, a registered trademark), stainless steel (SUS), and other corrosion resistant materials, and in the illustrated preferred embodiment, a PET-made mesh belt 105 excellent in heat resistance is used.

The mesh belt 105 is suspended and supported, as shown in Fig. 1 and Fig. 5, rotatably by way of a drive roller 107, a dewatering roll unit 96, a drive roller 108, and a belt meandering preventive unit 10, and is driven and coupled to the drive motor 106 by way of the drive roller 107.

The paper making process length of the mesh belt 105 is determined within a range of the upper side running direction length of the mesh belt 105 in the apparatus case 6 of furniture size (in the shown example, the lateral direction length from the pulp supply unit 101 to the dewatering roll unit 96 in Fig. 1).

The running speed of the mesh belt 105 is set in consideration of various conditions in the paper making process, and preferably set at 0.1 m/min to 1 m/m, and set at 0.2 m/min in the illustrated preferred embodiment. By contrast, in large-scale plant such as conventional used paper recycling factory, the running speed of the paper making belt of this type is set at least at 100 m/min or more, or even more than 1000 m/min in a faster version.

As shown in Fig. 1 and Fig. 5, the mesh belt 105 is disposed so as to run obliquely and straightly toward its running direction, and in the limited space of installation, the paper making process length can be extended considerably, and the filtering and dewatering rate is enhanced in the relation with the paper making mesh structure of the mesh belt 105.

The drive motor 106 for moving and driving the mesh belt 105 is specifically an electric motor, and is connected electrically to the apparatus control unit 5. This drive motor 106 is also used as the running and driving source of the dewatering roll unit 96 and the drying belt conveyor unit 97 described below.

The pulp supply unit 101 is a location for supplying a pulp suspension PS onto the mesh belt 105 from the pulp making unit 2, and although not specifically shown, by this pulp supply unit 101, the pulp suspension PS is spread uniformly on the top surface of the mesh belt 105. The pulp supply unit 101 is provided at the start end position of the paper making process of the paper making conveyor 100.

By the second suspension supply pump 90, the pulp suspension PS supplied into the pulp supply unit 101 from the pulp supply tank 89 is stored and reserved by a specified amount in this pulp supply unit 101, and by this reserving action, it is diffused uniformly on the top surface of the mesh belt 105. The pulp suspension PS diffused uniformly on the top surface of the mesh belt 105 is conveyed together with the mesh belt 105 by the driving action of the mesh belt 105 in the arrow direction, and is filtered by weight by the mesh cells of the mesh belt 105, and is dewatered, and wet paper RP₀ (water content 90 to 85% in the illustrated preferred embodiment) is obtained.

The white water W filtered and dewatered by this mesh belt 105 (pulp water of ultra-low concentration filtered by the paper making mesh in the paper making process) is collected in the white water collection tank 45 of the water feed device 27 as mentioned above.

The dewatering roll unit 96 forms a location for squeezing and dewatering the wet paper RP₀ on the mesh belt 105 at the linkage position of the paper making net conveyor unit 95 and the drying belt conveyor unit 97 described below.

Specifically, a smooth surface belt 145 mentioned below of the drying belt conveyor unit 97 at the downstream side, and the mesh belt 105 of the paper making net conveyor unit 95 at the upstream side are disposed in upper and lower layers as shown in Fig. 1 and Fig. 5, and the upper and lower adjacent portions of the smooth surface belt 145 and the mesh belt 105 are formed at the linkage portion, and at this linkage portion, the dewatering roll unit 96 rolls and compresses the mesh belt 105 and the smooth surface belt 145 from upper and lower sides in a compressed state, thereby dewatering the wet paper.

The dewatering roll unit 96 includes at least a preliminary dewatering roll unit 96A, and a final dewatering roll unit 96B as principal components.

The dewatering roll unit 96 in the illustrated preferred embodiment includes, as specifically shown in Fig. 1, the preliminary dewatering roll unit 96A, the final dewatering roll unit 96B, and an angle defining roll unit 96C as assisting means, as principal components.

The preliminary dewatering roll unit 96A is for squeezing and dewatering preliminarily the wet paper RP₀ on the mesh belt 105, and specifically includes a preliminary squeezing roll pair 122 consisting of a preliminary dewatering roll 120 rolling on the mesh belt 105 from the lower side, and a preliminary press roll 121 rolling and pressing on the smooth surface belt 145 from the upper side in collaboration with the preliminary dewatering roll 120.

By the preliminary squeezing roll pair 122 consisting of the preliminary dewatering roll 120 and the preliminary press roll 121, the mesh belt 105 and the smooth surface belt 145 are rolled and squeezed from both upper and lower sides at a specified preliminary pressure in a compressed state, and the water content in the wet paper RP₀ on the mesh belt 105 is removed preliminarily.

In this case, the preliminary pressure, that is, the preliminary squeezing force of the preliminary dewatering roll 96A for preliminarily squeezing and dewatering the wet paper RP₀ on the mesh belt 105 is set at a magnitude so as not to destroy the wet paper RP₀ of high water content, and in the illustrated preferred embodiment, the preliminary squeezing force is determined so that the water content of the wet paper RP₀ on the mesh belt 105 after preliminary dewatering process may be in a range of 80 to 75%.

The final dewatering roll unit 96B is for obtaining a dry paper specified water content (recycled paper) RP by further squeezing and dewatering the wet paper RP₀ on the mesh belt 105 after preliminary dewatering by the preliminary dewatering roll unit 96A, and specifically includes at least one set of a final squeezing roll pair 127 consisting of a final dewatering roll 125 rolling on the mesh belt 105 from the lower side, and a final press roll 126 rolling and pressing on the smooth surface belt 145 from the upper side in cooperation with the final dewatering roll 125.

By the final squeezing roll pair 127 consisting of the final dewatering roll 125 and the final press roll 126, the mesh belt 105 and the smooth surface belt 145 are rolled and squeezed from both upper and lower sides at a specified final pressure in a compressed state, and the water content in the wet paper RP₀ on the mesh belt 105 is finally removed, and a dry paper of specified water content, that is, recycled paper RP is obtained.

In this case, the final pressure, that is, the final squeezing force of the final dewatering roll 96B for finally squeezing and dewatering the wet paper RP₀ on the mesh belt 105 is set to such a magnitude for obtaining a specified dewatering effect securely about the preliminarily dewatered wet paper RP₀, and in the illustrated preferred embodiment, it is set so that the water content of the dry paper (recycled paper) RP on the mesh belt 105 after the final dewatering process may be in a range of 70 to 65%.

These rolls 120, 121,125,126 in the dewatering roll unit 96 are not specifically shown, but as being driven and coupled to the single drive motor 106 by driving and coupling means of gear mechanism, all rolls 120, 121,125,126 are rotated and driven in mutual interaction.

In this case, these rolls 120, 121,125,126 are rotated and controlled so as to roll and contact mutually at a slight rotating speed difference mutually on the outer circumferential surfaces of the upper and lower rolls 120, 125 and the outer circumferential surfaces of 121, 126, on the contact surfaces (the lower side of the mesh belt 105 and the upper side of the smooth surface belt 145) of the mesh belt 105 and the smooth surface belt 145 rolled and squeezed in a compressed state between the outer circumferential surfaces.

Specifically, the rotating speed of the upper side preliminary and final press rolls 121, 126 is set slightly larger than the rotating speed of the lower side preliminary and final dewatering rolls 120, 125, and therefore the running speed of the smooth surface belt 145 is set slightly larger than the running speed of the mesh belt 105. In such configuration, as described below, when the wet paper RP₀ squeezed and dewatered by the dewatering roll unit 96 is transferred and conveyed to the lower side of the upper side smooth surface belt 145 from the upper side of the lower side mesh belt 105, a tension is applied to the wet paper RP₀, and wrinkling of the wet paper RP₀ is effectively prevented.

The angle defining roll unit (angle defining means) 96C is for assisting the squeezing and dewatering action of the preliminary dewatering roll unit 96A and the final dewatering roll unit 96B to be effective, and it is provided at the upstream side of the preliminary dewatering roll unit 96A, and defines the inclination angle between the mesh belt 105 and the smooth surface belt 145 inserted in the preliminary dewatering roll unit 96A.

The angle defining roll unit 96C is specifically for defining the inclination angle between the mesh belt 105 and the smooth surface belt 145 inserted in the preliminary dewatering roll unit 96A, and more specifically it includes a mesh belt guide roll 130 rolling on the mesh belt 105 from the lower side, and defining the insertion angle of the mesh belt 105 in the preliminary dewatering roll unit 96A, and a smooth surface belt guide roll 131 rolling on the smooth surface belt 145 from the upper side, and defining the insertion angle of the smooth surface belt 145 in the preliminary dewatering roll unit 96A. As mentioned below, this smooth surface belt guide roll 131 functions also as a rolling roller 140a of the belt meandering preventive unit 11 for preventing meandering of the smooth surface belt 145 of the drying belt conveyor unit 97.

By the mesh belt guide roll 130, the insertion angle of the mesh belt 105 in the preliminary dewatering roll unit 96A is defined, and by the smooth surface belt guide roll 131, the insertion angle of the smooth surface belt 145 in the preliminary dewatering roll unit 96A is defined, and therefore the inclination angle between the mesh belt 105 and the smooth surface belt 145 is indirectly determined in a specified range.

The inclination angle of the mesh belt 105 and the smooth surface belt 145 is determined so as to prevent effectively the wet paper RP₀ from returning to slurry by re-absorption of a large volume of squeezed water into the wet paper RP₀ after the water contained in the wet paper RP₀ is once squeezed substantially to the upstream side of the preliminary dewatering roll unit 96A by the preliminary dewatering action by the preliminary dewatering roll unit 96A.

That is, by the preliminary dewatering roll 120 and the preliminary press roll 121 of the preliminary dewatering roll 96A, when the mesh belt 105 and the smooth surface belt 145 on which the wet paper RP₀ is mounted at the upper side are squeezed and rolled from the upper and lower sides in a compressed state, the water content in the wet paper RP₀ is squeezed out to the upstream side of the both rolls 120, 121.

In this case, if the inclination angle α between the mesh belt 105 and the smooth surface belt 145 is too large, at a position near the upstream side of the both rolls 120, 121, the upper side smooth surface belt 145 is apart from the wet paper RP₀ on the lower side mesh belt 105, and hence a part of the abundant squeezed water contained in the wet paper RP₀ may be absorbed again in the wet paper RP₀, and the wet paper RP₀ may become slurry again.

By contrast, when the inclination angle α between the mesh belt 105 and the smooth surface belt 145 is small, at a position near the upstream side of the both rolls 120, 121, the upper side smooth surface belt 145 is pressed to the wet paper RP₀ on the lower side mesh belt 105, and hence all of the water squeezed from the wet paper RP₀ drops to the lower side by way of the mesh belt 105, and is not absorbed again in the wet paper RP₀, and the wet paper RP₀ may be prevented from becoming slurry again.

The inclination angle α between the mesh belt 105 and the smooth surface belt 145 is preferably set in a range of 1 to 20 degrees as a result of various tests, preferably 3 to 7 degrees, and it is set at 5 degrees in the illustrated preferred embodiment.

Thus, by driving of the drive motor 106, the rolls 120, 121, 125, 126 of the preliminary dewatering roll 96A and the final dewatering roll 96B in the dewatering roll unit 96 are put in rotation, and first by the preliminary squeezing roll pair 122 in the preliminary dewatering roll 96A, the mesh belt 105 and the smooth surface belt 145 are rolled and squeezed from both upper and lower sides in a compressed state at a specified preliminary pressure, and the water contained in the wet paper RP₀ on the mesh belt 105 is preliminarily removed (in the illustrated preferred embodiment, the water content in the wet paper RP₀ is reduced from 90 to 85% to 80 to 75%).

In succession, by the final squeezing roll pair 127 in the final dewatering roll unit 96B, the mesh belt 105 and the smooth surface belt 145 are rolled and squeezed from both upper and lower sides in a compressed state at a specified final pressure, and the water contained in the wet paper RP₀ on the mesh belt 105 is finally removed, and the dry paper of specified water content, that is, the recycled paper RP is obtained (in the illustrated preferred embodiment, the wet paper RP₀ of water content of 80 to 75% is dewatered to the dry paper RP of water content of 70 to 65%). In this series of process, the white water W squeezed and dewatered from the wet paper RP₀ is collected in the white water collection tank 45 in the water feed device 27.

The wet paper RP₀ squeezed and dewatered by the dewatering roll unit 96 is transferred and conveyed to the lower side of the upper side smooth surface belt 145 from the upper side of the lower side mesh belt 105, at a downstream side location of the dewatering roll unit 96, and is conveyed together with the smooth surface belt 145, and is dried by the drying process unit 97 in the drying process.

This transfer action is considered to be caused by a smooth surface structure of the smooth surface belt 145. That is, the surface of the lower side mesh belt 105 is a fine rough surface having multiple fine continuous pores, whereas the surface of the upper side smooth surface belt 145 is a smooth surface without pores, and hence the dry paper RP₀ slightly containing water seems to be adsorbed by the surface tension against the surface of the smooth surface belt 145.

The belt meandering preventive unit 10 is to prevent meandering of the mesh belt 105, and mainly includes a rolling roller 140, a roller oscillating unit (roller oscillating means) 141, a belt meandering detector (belt detecting means) 142, a roller position detector (roller detecting means) 143, and a meandering control unit (control means) 144, as principal components.

The rolling roller 140 is designed to roll on the mesh belt 105 in a pressure applying state, and more specifically one rolling roller 140 is configured to roll on a position not interfering with the processing function of the processing and conveying position of the mesh belt 105.

In the illustrated preferred embodiment, as shown in Fig. 1 and Fig. 5, on the mesh belt 105, one rolling roller 140 is configured to roll on the lower side position between the drive roller 107 and the drive roller 108, that is, at the position for composing the feedback process after completion of the paper making process for manufacturing wet paper RP₀ by filtering and dewatering the pulp suspension PS.

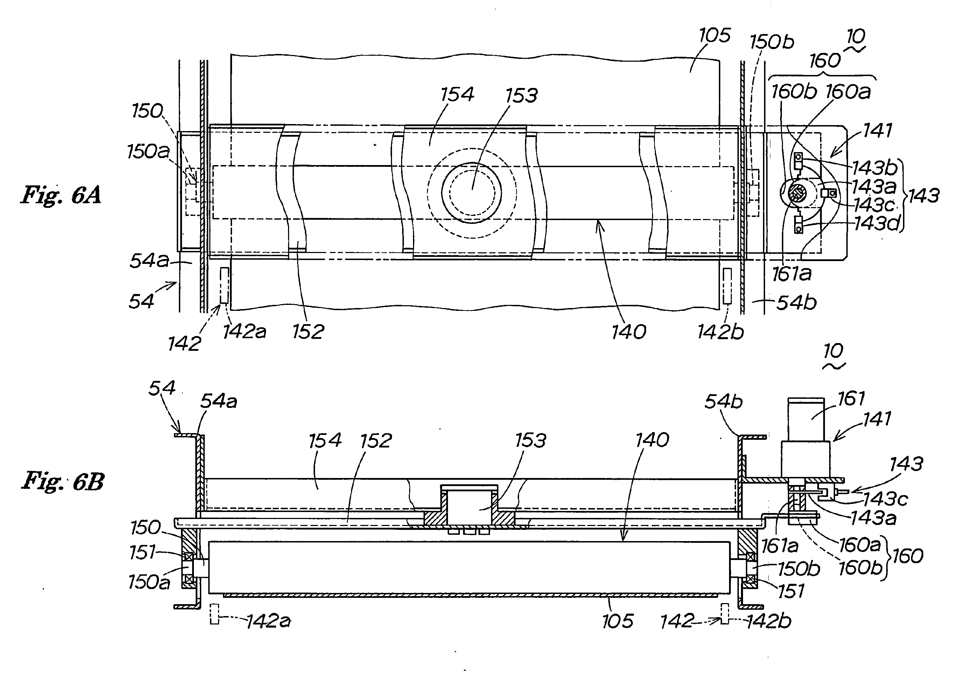

The rolling roller 140 is a hollow cylindrical metal structure as shown in Fig. 6, in which both end parts 150a, 150b of its rotation support shaft 150 is rotatably supported on a support bracket 152 by way of bearings 151, 151, and this support bracket 152 is pivoted on a fixed side support unit 154 oscillatably in the horizontal direction by way of a support shaft 153 fixed at the central position in its longitudinal direction.

More specifically, support frames 54a, 54b of an apparatus machine body 54 for composing the apparatus case 6 are extended parallel to the running direction of the mesh belt 105, and the support frames for composing the fixed side support unit 154 are bridged and fixed on these two support frames 54a, 54b, and the support shaft 153 of the support bracket 152 is supported and held rotatably on a bearing unit 154a of this fixed side support unit 154. As a result, the rolling roller 140 rotatably supported on the support bracket 152 is oscillatable in the horizontal direction around the center of oscillation of the support shaft 153.

The rolling roller 140 is a metal roller made of stainless steel or aluminum alloy, and the rolling roller 140 in the illustrated preferred embodiment is a hollow cylindrical roller of stainless steel.

Since the rolling roller 140 rolls on the mesh belt 105 in a tension applying state, by controlling and adjusting the position of the rolling roller 140 with respect to the running direction of the mesh belt 105, meandering of the mesh belt 105 can be prevented or corrected by the frictional force occurring between the rolling roller 140 and the mesh belt 105.

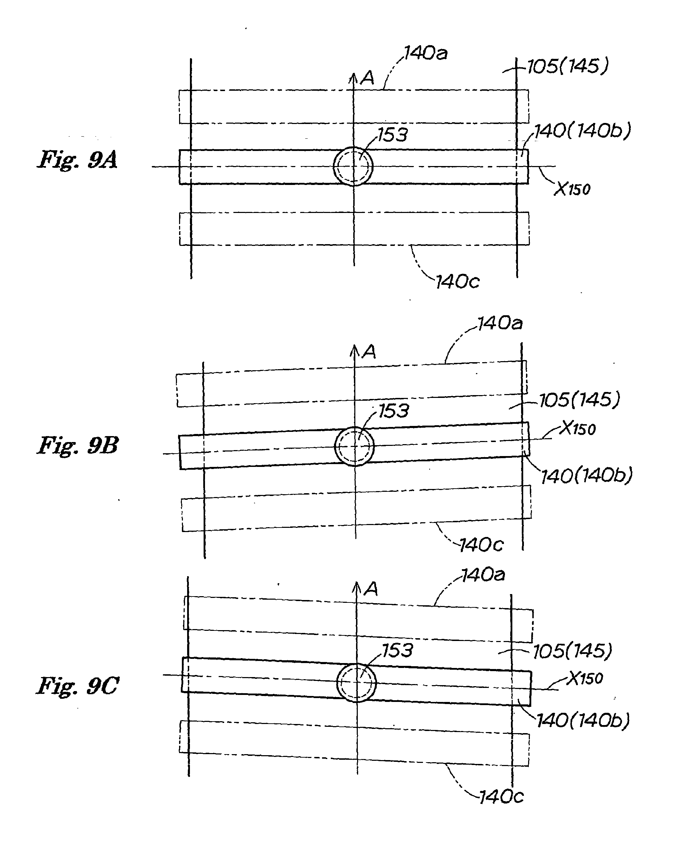

That is, referring to Fig. 9, while the rolling roller 140 is in an ordinary state, that is, as shown in Fig. 9 (a), when the rotation axial line of the rolling roller 140, that is, the axial center X₁₅₀ of the rotation support shaft 150 is held at a neutral position being perpendicular to the running direction A of the mesh belt 105, the rolling roller 140 functions as a running guide roller for rolling and guiding the mesh belt 105.

Or, when the rotation axial line X₁₅₀ of the rolling roller 140 is held at a leftward inclination position inclined to the left from the neutral position being perpendicular to the running direction A of the mesh belt 105 (the position in Fig. 9 (a)), the rolling roller 140 acts to correct the meandering motion in the left side direction by acting to move the mesh belt 105 to the left side direction.

Similarly, when the rotation axial line X₁₅₀ of the rolling roller 140 is held at a rightward inclination position inclined to the right from the neutral position being perpendicular to the running direction A of the mesh belt 105 (the position in Fig. 9 (a)), the rolling roller 140 acts to correct the meandering motion in the right side direction by acting to move the mesh belt 105 to the right side direction.

The roller oscillating unit 141 is to oscillate the rolling roller 140 in a direction intersecting with the running direction of the mesh belt 105, and is composed of an oscillating cam mechanism (cam means) 160, and a drive motor (drive source) 161 for driving this oscillating cam mechanism 160 by cam action.

The oscillating cam mechanism 160 is, as shown in Fig. 6, provided at one end part of the support bracket 152 for rotatably supporting the rolling roller 140, and is specifically formed as a rotary cam to be rotated by the drive motor 161 by cam action.

The oscillating cam mechanism 160 in the illustrated preferred embodiment is composed of a drive cam 160a rotated and driven by the drive motor 161, and a follower cam 160b formed at one end part of the support bracket 152 and formed as an engaging groove to slide and engage with the drive cam 160a.

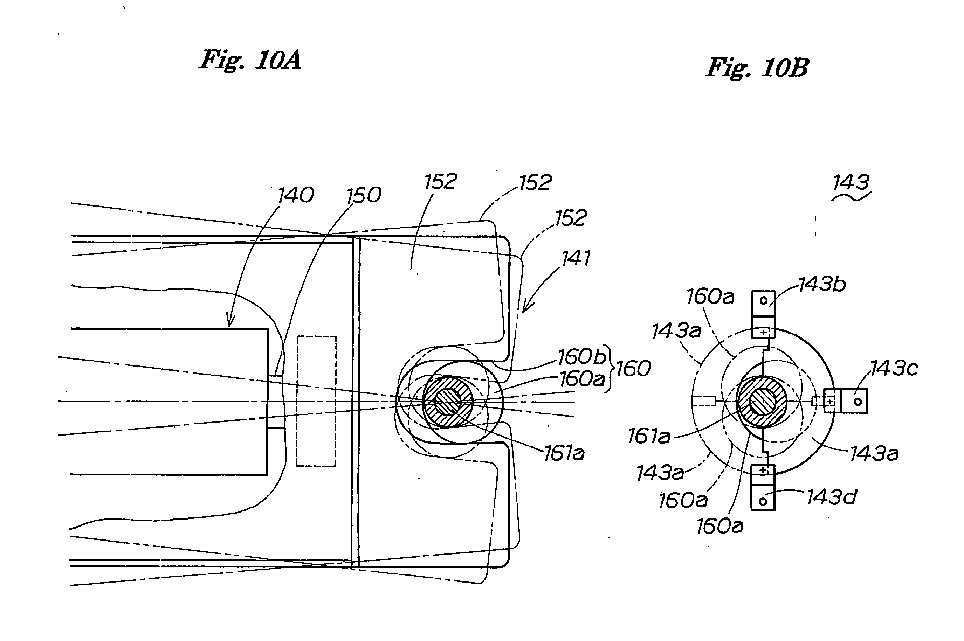

Specifically, as shown in Fig. 10a, the drive cam 160a is a disk-shaped eccentric cam having a disk cam mounted and fixed eccentrically on a rotation shaft 161a of the drive motor 161, and the follower cam 160b is a U-shaped engaging groove to slide and engage with this drive cam 160a. The drive motor 161 is specifically an electric motor, and this drive motor 161 is electrically connected to the apparatus control unit 5.

By the rotating motion of the drive cam 160a driven by the drive motor 161, by way of the follower cam 160b to slide and engage with this drive cam 160a, the support bracket 152 and further the rolling roller 140 are oscillated in the horizontal direction, so that the rolling roller 140 is positioned as shown in Fig. 9 (a) to (c), and thereby meandering of the mesh belt 105 is corrected as described below.

In this relation, the belt meandering detector 142 for detecting the running state of the mesh belt 105, and the roller position detector 143 for detecting the position of the rolling roller 140 are provided.

The belt meandering detector 142 is to detect whether or not the mesh belt 105 is running in an appropriate running range, and specifically as shown in Fig. 1 and Fig. 5, at the downstream side position of the mesh belt 105 passing through the drive roller 107, a pair of detection sensors 142a, 142b are disposed upward respectively at the downward position at both sides in the width direction of the mesh belt 105 (see double dot chain line in Fig. 6).

The width direction range of the mesh belt 105 held by the pair of detection sensors 142a, 142b defines the appropriate running range of the mesh belt 105, and this appropriate running range is defined within a meandering allowable range for the mesh belt 105 to execute the paper making process stably smoothly and stably for manufacturing wet paper RP₀ by filtering and dewatering the pulp suspension PS, and the appropriate running range is specifically determined actually by experimental execution of the paper making process.

The detection sensors 142a, 142b are preferably contact-free position detection sensors, and in the illustrated preferred embodiment, reflection type photo sensors are used. These detection sensors 142a, 142b are electrically connected to the apparatus control unit 5.

Referring now to Fig. 6, while the mesh belt 105 is running between the pair of detection sensors 142a, 142b, that is, while the mesh belt 105 is running in the appropriate running range, either one of the detection sensors 142a, 142b does not detect the presence of the mesh belt 105. When the mesh belt 105 meanders excessively to the left side, the left side detection sensor 142a detects the presence of the mesh belt 105, and when the mesh belt 105 meanders excessively to the right side, the right side detection sensor 142b detects the presence of the mesh belt 105, and the detection signal is sent to the apparatus control unit 5 as a control signal.

The roller position detector 143 detects the position of the rolling roller 140, that is, detects the axial center X₁₅₀ of the rolling roller 140 is directed to which direction with respect to the running direction A of the mesh belt 105, and specifically it is disposed in relation to the drive cam 160a as shown in Fig. 6 and Fig. 10.

That is, the roller position detector 143 is composed of a rotor 143a fixed coaxially with the drive cam 160a in the support frame 154, that is, in relation to the rotating direction position of the drive cam 160a on the rotation shaft 161a of the drive motor 161, and three detection sensors 143b, 143c, 143d for detecting the rotating direction position of the drive ca 160a, that is, the position of the rolling roller 140, from the rotating direction position of this rotor 143a.

The rotor 143a is formed in a semicircular flat plate related to the rotating direction position of the drive cam 160a formed as a disk-shaped eccentric cam, and at both ends of the straight edge portion of this semicircular flat plate 143a, notches are formed as shown in Fig. 10 (b).

The three detection sensors 143b, 143c, 143d are disposed at an angle of 90 degrees along the outer peripheral edge of the rotor 143a as shown in Fig. 10 (b), with respect to the rotor 143a.

These three detection sensors 143b, 143c, 143d are preferably contact-free position detection sensors, and transmission type photo interrupters are used in the illustrated preferred embodiment. These detection sensors 143b, 143c, 143d are electrically connected to the apparatus control unit 5.

Referring now to Fig. 9 and Fig. 10, when the rotor 143a is at the rotating direction position indicated by solid line in Fig. 10 (b), with respect to the detection sensors 143b, 143c, 143d, the rolling roller 140 is at a neutral position (solid-line position in Fig. 10 (a)) shown in Fig. 9 (a), and at this time only the detection sensor 143c at the central position detects the rotor 143a, and its detection signal is sent to the apparatus control unit 5 as a control signal. On the other hand, the detection sensors 143b, 143d at both sides do not detect the rotor 143a (the detection sensors 143b, 143d allow to pass the transmitted light through the notches in the rotor 143a).

Further, when the rotor 143a is at the rotating direction position indicated by single-dot chain line in Fig. 10 (b), the rolling roller 140 is at a left inclination position (single-dot chain line position in Fig. 10 (a)) shown in Fig. 9 (b), and at this time only the detection sensor 143b detects the rotor 143a, and its detection signal is sent to the apparatus control unit 5 as a control signal. On the other hand, the remaining detection sensors 143c, 143d do not detect the rotor 143a (the detection sensor 143c allows to pass the transmitted light through the notches in the rotor 143a).

Moreover, when the rotor 143a is at the rotating direction position indicated by double-dot chain line in Fig. 10 (b), the rolling roller 140 is at a right inclination position (double-dot chain line position in Fig. 10 (a)) shown in Fig. 9 (c), and at this time only the detection sensor 143d detects the rotor 143a, and its detection signal is sent to the apparatus control unit 5 as a control signal. On the other hand, the remaining detection sensors 143b, 143c do not detect the rotor 143a (the detection sensor 143c allows to pass the transmitted light through the notches in the rotor 143a).

The meandering control unit 144 controls the roller oscillating unit 141 according to the detection results by the belt meandering detector 142 and the roller position detector 143, and composes a part of the apparatus control unit 5, and automatically controls the drive motor 161 of the roller oscillating unit 141 so a to execute the following belt meandering correction process.

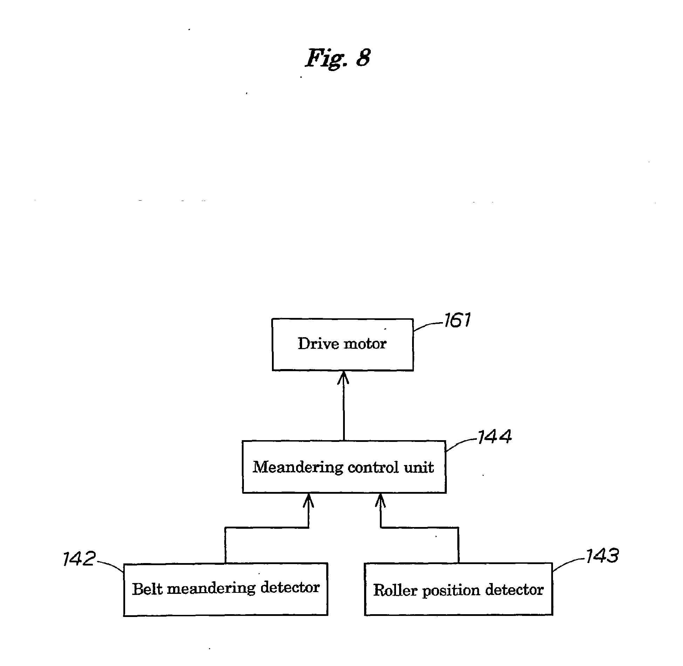

That is, the meandering control unit 144 is composed and configured as shown in Fig. 8, and receives the detection signals (control signals) from the detection sensors 142a, 142b of the belt meandering detector 142, and maintains the neutral position so that the rolling roller 140 may be perpendicular to the running direction A of the mesh belt 105 while the running position of the mesh belt 105 is within an appropriate running range (see Fig. 9 (a)), and controls the drive motor 161 of the roller oscillating unit 141 so that the rolling roller 140 may be directed in the meandering correcting direction for moving the running position of the mesh belt 105 within the appropriate running range (see Fig. 9 (b) or (c)) when the running position of the mesh belt 105 is out of the appropriate running range.

On the other hand, the position of the rolling roller 140 is always detected by the roller position detector 143, and when the meandering control unit 144 detects that the running position of the mesh belt 105 is corrected of meandering within the appropriate running range by the detections signals from the detection sensors 142a, 142b of the belt meandering detector 142, it controls the drive motor 161 of the roller oscillating unit 141 so as to move and return the rolling roller 140 to the neutral position (the position shown in Fig. 9 (a)) from the present meandering correcting position of the mesh belt 105 according to the detection signals from the detection sensors 142a, 142b, 143c of the roller position detector 143.

When the running position of the mesh belt 105 is out of the appropriate running range, a specific meandering correcting action by the roller oscillating unit 141 is appropriately selected from the following: (A) the rolling roller 140 moves slowly and gradually from the neutral position (the position shown in Fig. 9 (a)) toward the maximum meandering correcting direction position (the position shown in Fig. 9 (b) or (c)), and when the running position of the mesh belt 105 is corrected of meandering within the appropriate running range, the rolling roller 140 is moved, returned and stopped at the neutral position, or (B) the rolling roller 140 moves straightly from the neutral position to the maximum meandering correcting position direction position and stops, and when the running position of the running belts 105, 145 is corrected of meandering within the appropriate running range, the rolling roller moves and returns to the neutral position, and stops. In the illustrated preferred embodiment, the meandering correcting action of (A) is employed.

Therefore, by the belt meandering preventive part 10, the mesh belt 105 of the paper making net conveyor unit 95 executes the paper making process for manufacturing wet paper RP₀ while filtering and dewatering the pulp suspension PS, while running in an appropriate running range defined by the detection sensors 142a, 142b of the belt meandering detector 142.

The drying belt conveyor 97 is a location for manufacturing the recycled paper RP by further heating and drying the dry paper RP squeezed and dewatered in the dewatering roll unit 96 in the paper making net conveyor unit 95, and is mainly composed of a drying conveyor 170 and a drying heating unit 171.

The drying conveyor 170 is for smoothing and conveying the wet paper RP₀ squeezed and dewatered in the dewatering roll unit 96, and mainly includes the smooth surface belt 145, and the drive moor 106 for driving and moving this smooth surface belt 145.

The smooth surface belt 145 is to convey the wet paper RP₀ while heating and drying, and is specifically an endless belt connected and formed in an annular shape of a specified length of a plate material of smooth surface structure having a specified width. The plate material of smooth surface structure is finished in an appropriate smooth surface at one side of the surface of the wet paper RP₀, and is made of a material capable of withstanding the heating action of the heating and drying unit 171 described below, and preferably an elastic heat resistant material is used such as fluorine resin or stainless steel, and a fluorine resin belt is used in the illustrated preferred embodiment.

This smooth surface belt 145 is, as shown in Fig. 1, rotatably supported and held by way of a drive roller 176, a driven roller 178, the belt meandering preventive unit 11 and the dewatering roll unit 96, and is driven and coupled to the drive motor 106 by way of the drive roller 176.

The drive motor 106 for driving and moving the smooth surface belt 145 is commonly used as the running and driving source of the paper making conveyor 100 and the dewatering roll unit 96 as mentioned above.

The heating and drying unit 171 is a location for heating and drying the wet paper RP₀ on the smooth surface belt 145, and includes a heater plate 180, as a heating unit, disposed in the midst of the running route of the smooth surface belt 145.

This heater plate 180 is specifically configured to heat and dry the wet paper RP₀ on the smooth surface belt 145 indirectly by way of the smooth surface belt 145.

In the midst of the running route of the smooth surface belt 145, two smooth surface finishing rolls 179, 179 are disposed, and are configured so as to roll and pressurize the wet paper RP₀ on the smooth surface belt 145 sequentially, and thereby the surface of one side and the surface of opposite side of the wet paper RP₀ contacting with the surface of the smooth surface belt 145 may be finished to a proper smooth surface.

At the downstream side of the heating and drying unit 171 in the smooth surface belt 145, a peeling member 181 is provided, and the dry paper dried and conveyed on the smooth surface belt 145, that is, the recycled paper RP (water content 10 to7%) is sequentially peeled from the holding side of the smooth surface belt 145.

In this relation, at the terminal end position of the running route of the smooth surface belt 145 at the downstream' side of this peeling member 151, a fixed size cutter unit 182 is provided, and the recycled paper RP peeled off from the smooth surface belt 145 is cut to a specified size (an A4 format in the illustrated preferred embodiment), and is discharged from the discharge port 8 of the apparatus case 6.

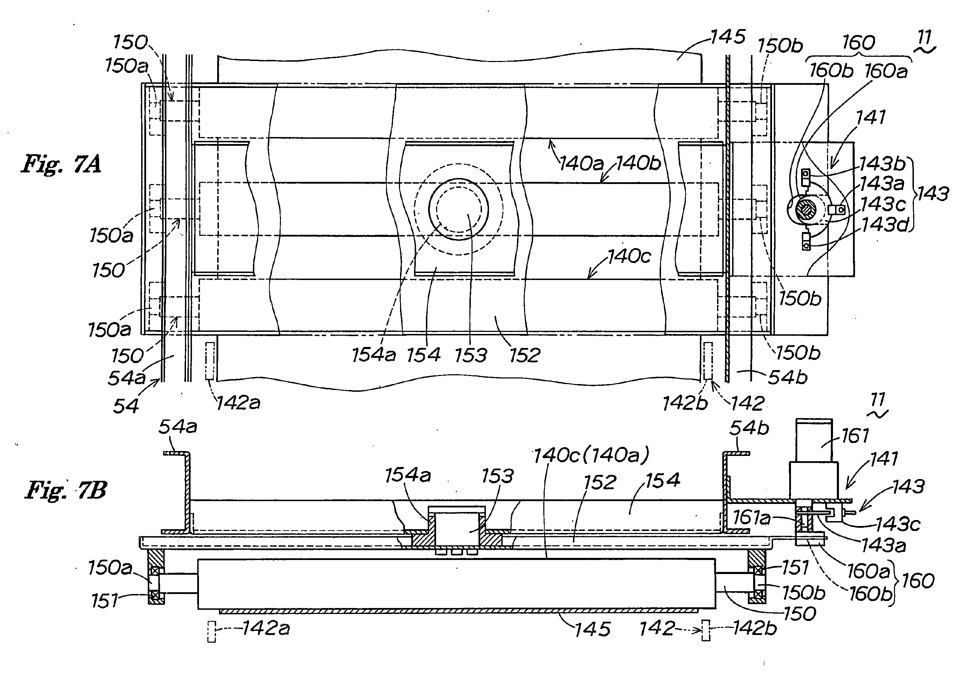

The belt meandering preventive unit 11 is to prevent meandering of the smooth surface belt 145, and same as the belt meandering preventive unit 10 of the mesh belt 105, it is mainly composed of, as shown in Fig. 7, rolling rollers 140a, 140b, 140c, a roller oscillating unit 141, a belt meandering detector 142, a roller position detector 143, and a meandering control unit 144.

The components of the belt meandering preventive unit 11 are same in configuration as those of the belt meandering preventive unit 10 for the mesh belt 105, except that the three rolling rollers 140a, 140b, 140c are provided.

That is, the smooth surface belt 145 to be corrected of meandering by the belt meandering preventive unit 11 is a fluorine resin belt as mentioned above, and the smooth surface belt 145 of fluorine resin is inferior to the mesh belt 105 in elasticity and flexibility, and smooth and sufficient meandering preventive effect is not obtained by one rolling roller 140 alone, and hence the three rolling rollers 140a, 140b, 140c are provided in the belt meandering preventive unit 11.

The rolling configuration of these three rolling rollers 140a, 140b, 140c on the smooth surface belt 145 is as shown in Fig. 1 and Fig. 5, that is, the smooth surface belt 145 is rolled and guided as being extended to the upper side of the rolling roller 140a, to the lower side of the rolling roller 140b, and to the upper side of the rolling roller 140c.

Further, as mentioned above, the rolling roller 140a of the belt meandering preventive unit 11 also functions as the smooth surface belt guide roll 131 of the angle defining roll unit 96C, and hence the apparatus configuration is reduced in size and simplified in structure.

The other configuration and action of the belt meandering preventive unit 11 are same as in the belt meandering preventive unit 10 for the mesh belt 105, and specific description is omitted.

The apparatus control unit 5 is to control automatically by mutually interacting the operations of the drive parts of the pulp concentration adjustment unit 3 and the paper making unit 4, and is specifically composed of microcomputers formed of CPU, ROM, RAM, I/O port and others.

This apparatus control unit 5 incorporates programs for executing the pulp making process of the pulp making unit 2, the concentration adjusting process of the concentration adjusting unit 3, and the paper making process of the paper making unit 4, by interacting with each other, and also stores various items of information necessary for driving of the components 2 (20, 21), 3 (3A, 3B), and 4 (95, 96, 97, 10, 11), for example, the driving time and rotating speed of the agitating device 26 in the macerating unit 20, the water feed timing and water feed amount of the water feed device 27, the driving time and circulation amount of the circulation pump 69 in the beating unit 21, the driving time and rotating speed of the grinder 50, the adjusting timing and beating gap G adjusting amount of the gap adjusting means 57, the running speed of the conveyors 100, 17'0 in the paper making unit 4, the driving time of the heating and drying unit 171, the operation timing of the fixed size cutter unit 152, and the operation timing of the belt meandering preventive units 10, 11, preliminarily as data, or from the keyboard as appropriate selective input data.

In the apparatus control unit 5, as mentioned above, the weight sensors 48, 87, the detection sensors 142a, 142b, 143b, 143c, 143d, and the drive units 35, 56, 61, 66, 106 are connected electrically, and the apparatus control unit 5 controls these drive units 35, 56, 61, 66, 106, 161 according to the measured values and the control data.

The used paper recycling apparatus 1 having such configuration is started when the power source is turned on, and the components 2 (20, 21), 3 (3A, 3B), and 4 (95, 10, 96) are controlled automatically by the apparatus control unit 5 in mutual interaction, and the used paper UP, UP, ... charged in the inlet 7 of the apparatus case 6 are macerated and beaten by the macerating unit 20 and the beating unit 21 in the pulp making unit 2, and the used paper pulp UPP is manufactured, and further a pulp suspension PS of a paper making concentration is manufactured in the pulp concentration adjusting unit 3, and this pulp suspension PS is manufactured in the paper making net conveyor unit 95 of the paper making unit 4, the dewatering roll unit 96, and the drying belt conveyor unit 97, and recycled paper RP is obtained, which is discharged into the recycled paper receiving tray 9 from the discharge port 8b of the apparatus case 6.

In this case, by the belt meandering preventive units 10, 11 in the paper making unit 4, the rolling rollers 140, 140a, 140b, 140c roll on the running belts of the paper making net conveyor unit 95 and the drying belt conveyor unit 97, that is, the mesh belt 105 and the smooth surface belt 145 in a tension applying state, and the roller oscillating unit 141 oscillates the rolling rollers 140, 140a, 140b, 140c in a direction intersecting with the running direction of the running belts 105, 145, and while the running position of the running belts 105, 145 is within the appropriate running range, the rolling rollers 140, 140a, 140b, 140c are maintained at a neutral position perpendicular to the running direction of the running belts 105, 145, and when the running position of the running belts 105, 145 is out of the appropriate running range, the rolling rollers 140, 140a, 140b, 140c are configured to correct the running position of the running belts 105, 145 in a meandering correcting direction to move into the appropriate running range, and therefore the structure suited to a very compact apparatus structure of a used paper recycling apparatus of furniture size to be installed in a small shop or a general household room can be realized in a small and simple belt meandering preventive device, and hence the running belts of the belt conveyor unit of the paper making unit can be driven always stably within the appropriate running range, so that the paper making process in a very narrow processing space can be executed smoothly and efficiently at low trouble rate and high reliability.

Accordingly, the present invention realizes and presents a used paper recycling apparatus of furniture size that can be installed not only in a large office, but also in a small shop or a general household, being friendly to the environment, low in running cost, capable of preventing leak or disclosure of confidential information, personal information, and various types of information, and capable of maintaining a high confidentiality.

### Preferred Embodiment 2

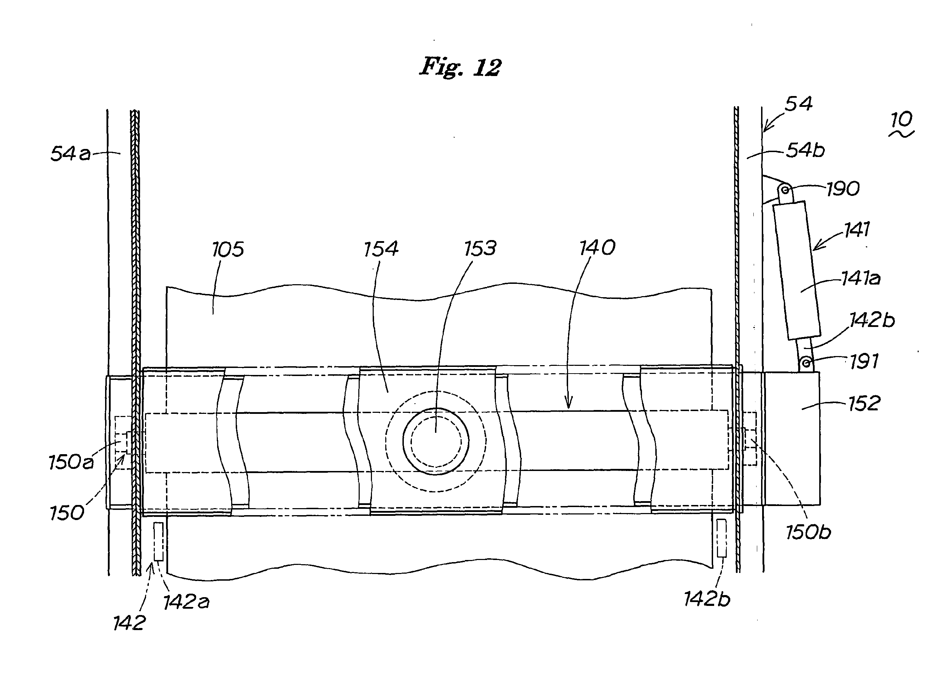

This preferred embodiment is shown in Fig. 12, which is modified in the specific configuration of the belt meandering preventive units 10, 11 in preferred embodiment 1.

That is, in the belt meandering preventive unit 10 of this preferred embodiment, the roller oscillating unit 141 is formed as an oscillating cylinder.

Specifically, the oscillating cylinder for composing this roller oscillating unit 141 has its cylinder main body 141a supported oscillatably on a support frame 154 which is a fixed side support part, by way of a support shaft 190, and its piston rod 141b is pivoted and coupled to one end of a support bracket 152 for rotatably supporting the rolling roller 140, by way of a support shaft 191.

By the protruding and retreating action of the piston rod 141b of the oscillating cylinder 141, the support bracket 152 and the rolling roller 140 are oscillated in a horizontal direction.

As the oscillating cylinder 141, preferably, an air cylinder device is used, and corresponding to the operation characteristic of this cylinder device, when the running position of the mesh belt 105 is out of the appropriate running range, the specific meandering correcting action by the roller oscillating unit 141 is different from that of preferred embodiment 1, that is, out of the meandering correcting operations of (A) and (B) explained above, the meandering correcting operation of (B) is selected, and the rolling roller 140 is moved and stopped from the neutral position (the position shown in Fig. 9 (a)) immediately to the maximum meandering correcting direction position (the position shown in Fig. 9 (b) or (c)), and when the running position of the mesh belt 105 is corrected of meandering to come within the appropriate running range, the rolling roller 140 moves and returns to the neutral position, and stops.

The other belt meandering preventive unit 11 is same as the belt meandering preventive unit 10, and the other configuration and actions are same as in preferred embodiment 1.

The foregoing preferred embodiments may be modified in design as described below.

For example, the specific configuration of the belt meandering preventive units (belt meandering preventive means) 10 and 11 of the present invention is not limited to the illustrated preferred embodiments 1 and 2, and may be built in other different configuration having similar functions, and in particular the specific configuration of the paper making net conveyor unit 95 and the drying belt conveyor unit 97 to be prevented of meandering may be appropriately changed and modified in design.

As the present invention may be embodied in several forms without departing from the spirit of essential characteristics thereof, the present preferred embodiment is therefore illustrative and not restrictive, since the scope of the present invention is defined by the appended claims rather than by the description preceding them, and all changes that fall within metes and bounds of the claims, or equivalence of such metes and bounds thereof are therefore intended to be embraced by the claims.

## Claims

1. A belt meandering preventive device of a used paper recycling apparatus, being a belt meandering preventive device for preventing meandering of running belts of a paper making unit for manufacturing recycled paper from used paper pulp manufactured in a pulp making unit of a preceding process, in a used paper recycling apparatus of furniture size to be installed at the site of origin of the used paper, comprising:
a rolling roller rolling on the running belt of the belt conveyor unit for processing and conveying the used paper pulp sent from the pulp making unit, while applying a tension,
roller oscillating means for oscillating this rolling roller in a direction intersecting with the running direction of the running belt, and
control means for controlling this roller oscillating means according to the running state of the running belt,
wherein this control means controls the roller oscillating means so that the rolling roller may maintain the neutral position so as to be perpendicular to the running direction of the running belt when the running position of the running belt is in an appropriate running range, and so that the rolling roller may be directed to a meandering correcting direction for moving the running position of the running belt into the appropriate running range when the running position of the running belt is out of the appropriate running range.

2. The belt meandering preventive device of the used paper recycling apparatus of claim 1,
wherein the rolling position of the rolling roller on the running belt is set at a location not interfering with the processing function of the processing and conveying location of the running belt.

3. The belt meandering preventive device of the used paper recycling apparatus of claim 1,
wherein the rolling roller has its both ends of the rotation support shaft supported on a support bracket, and the support bracket is oscillatably pivoted on the fixed side support part by way of a support shaft provided at the central position in the longitudinal direction.

4. The belt meandering preventive device of the used paper recycling apparatus of claim 3,
wherein the support bracket is pivoted on the fixed side support part so as to support the rolling roller in a horizontal state and to oscillate in a horizontal direction.

5. The belt meandering preventive device of the used paper recycling apparatus of claim 3,
wherein the roller oscillating means includes cam means provided at one end of the support bracket for supporting the rolling roller rotatably, and a drive source for driving this cam means by cam action, and
by the cam action of the cam means by the drive source, the support bracket is oscillated.

6. The belt meandering preventive device of the used paper recycling apparatus of claim 5,
wherein the cam means includes a drive cam formed as a disk-like eccentric cam rotated and operated by the drive source, and a driven cam formed at one end of the support bracket and made in a form of engaging groove to slidably contact and engage with the drive cam, and by the rotating motion of the drive cam, the support bracket oscillates by way of the driven cam to slidably contact and engage with the drive cam.

7. The belt meandering preventive device of the used paper recycling apparatus of claim 3,
wherein the roller oscillating means is formed as an oscillating cylinder having a piston rod pivoted and coupled to one end of the support bracket for rotatably supporting the rolling roller, and
by the protruding and retreating motion of the piston rod of the oscillating cylinder, the support bracket is designed to oscillate.

8. The belt meandering preventive device of the used paper recycling apparatus of claim 1, further comprising:
belt detecting means for detecting whether or not the running belt is running in an appropriate running range,
wherein the control means is designed to control according to the detection result of the belt detecting means so as to hold the rolling roller at a neutral position perpendicular to the running direction of the running belt in the case the running position of the running belt staying within an appropriate running range, to control the roller oscillating means so that the rolling roller may be at a meandering correcting position for moving the running belt into the appropriate running range in the case the running position of the running belt staying out of the appropriate running range.

9. The belt meandering preventive device of the used paper recycling apparatus of claim 8,
wherein the meandering correcting action of the roller oscillating means by the roller oscillating means is configured to move the rolling roller to move gradually from the neutral position to the maximum meandering correcting direction position when the running position of the running belt is out of the appropriate running range, and to move the rolling roller to the neutral position to stop when the running position of the running belt is corrected of meandering to return to the appropriate running range.

10. The belt meandering preventive device of the used paper recycling apparatus of claim 8,
wherein the meandering correcting action of the roller oscillating means by the roller oscillating means is configured to move the rolling roller to move instantly from the neutral position to the maximum meandering correcting direction position and stop when the running position of the running belt is out of the appropriate running range, and to move the rolling roller to the neutral position to stop when the running position of the running belt is corrected of meandering to return to the appropriate running range.

11. The belt meandering preventive device of the used paper recycling apparatus of claim 1,
wherein the running belt of the belt conveyor unit is a mesh belt of a paper making net conveyor unit for manufacturing wet paper from the slurry-like pulp suspension mixed of water and used paper pulp.

12. The belt meandering preventive device of the used paper recycling apparatus of claim 1,
wherein the running belt of the belt conveyor unit is a smooth surface belt of a drying belt conveyor unit for manufacturing recycled paper by drying the wet paper manufactured in the paper making net conveyor unit in a preceding process.

13. A paper making device of a used paper recycling apparatus, being a paper making device, applied in a used paper recycling apparatus of furniture size to be installed at the site of origin of used paper, for manufacturing recycled paper from used paper pulp manufactured in a pulp making unit of a preceding process, comprising:
a paper making net conveyor unit for manufacturing wet paper from a slurry-like pulp suspension mixed of water and used paper pulp sent from the pulp making unit,
a drying belt conveyor unit for manufacturing recycled paper by drying the wet paper manufactured in this paper making net conveyor unit, and
a dewatering roll unit for squeezing and dewatering the wet paper at a linkage part of the paper making net conveyor unit and the drying belt conveyor unit,
wherein the paper making net conveyor unit and the drying belt conveyor unit individually have running belts for processing and conveying the used paper pulp manufactured in the pulp making unit, and also have belt meandering preventive means for preventing meandering of these running belts,
this belt meandering preventive means has a rolling roller rolling on the running belt of the belt conveyor unit for processing and conveying the used paper pulp sent from the pulp making unit, while applying a tension, roller oscillating means for oscillating this rolling roller in a direction intersecting with the running direction of the running belt, and control means for controlling this roller oscillating means according to the running state of the running belt, and
this control means controls the roller oscillating means so that the rolling roller may maintain the neutral position so as to be perpendicular to the running direction of the running belt when the running position of the running belt is in an appropriate running range, and so that the rolling roller may be directed to a meandering correcting direction for moving the running position of the running belt into the appropriate running range when the running position of the running belt is out of the appropriate running range.

14. A used paper recycling apparatus comprising, in an apparatus case of furniture size, a pulp making unit for manufacturing used paper pulp by macerating and beating used paper, a paper making unit for manufacturing recycled paper by making from the used paper pulp manufactured in this pulp making unit, and a control unit for driving and controlling the pulp making unit and the paper making unit in cooperation,
wherein the paper making unit includes a paper making net conveyor unit for manufacturing wet paper from a slurry-like pulp suspension mixed of water and used paper pulp sent from the pulp making unit, a drying belt conveyor unit for manufacturing recycled paper by drying the wet paper manufactured in this paper making net conveyor unit, and a dewatering roll unit for squeezing and dewatering the wet paper at a linkage part of the paper making net conveyor unit and the drying belt conveyor unit,
the paper making net conveyor unit and the drying belt conveyor unit individually have running belts for processing and conveying the used paper pulp manufactured in the pulp making unit, and also have belt meandering preventive means for preventing meandering of these running belts,
this belt meandering preventive means has a rolling roller rolling on the running belt of the belt conveyor unit for processing and conveying the used paper pulp sent from the pulp making unit, while applying a tension, roller oscillating means for oscillating this rolling roller in a direction intersecting with the running direction of the running belt, and control means for controlling this roller oscillating means according to the running state of the running belt, and
this control means controls the roller oscillating means so that the rolling roller may maintain the neutral position so as to be perpendicular to the running direction of the running belt when the running position of the running belt is in an appropriate running range, and so that the rolling roller may be directed to a meandering correcting direction for moving the running position of the running belt into the appropriate running range when the running position of the running belt is out of the appropriate running range.
